# EUROPÄISCHE PATENTSCHRIFT

(11) **EP 2 626 641 B1**
(45) Veröffentlichungstag und Bekanntmachung des Hinweises auf die Patenterteilung: **15.06.2016**
(21) Anmeldenummer: 13153894.4
(22) Anmeldetag: 04.02.2013
(51) Int. Cl.: F24D 13/02, A61G 13/10, H05B 3/26

(54) **Reinraum mit einer Infrarotstrahlungs-Flächenheizung**
Clean room with an infrared radiation panel heating
Salle blanche avec chauffage de surface à rayonnement infrarouge

(30) Priorität: 08.02.2012 DE 202012100410 U
(43) Veröffentlichungstag der Anmeldung: 14.08.2013
(73) Patentinhaber: tepa GmbH, 09419 Thum (DE)
(72) Erfinder: Emmrich, Tino, 09419 Thum (DE)
(74) Vertreter: Steiniger, Carmen

(56) Entgegenhaltungen:
- WO-A1-95/16168
- DE-U1-202009 016 870
- US-A1- 2011 097 986

## Beschreibung

Die vorliegende Erfindung betrifft einen Reinraum mit eine Infrarotstrahlungs-Flächenheizung. Dabei wird erfindungsgemäß unter einem Reinraum ein Raum verstanden, welcher sich durch charakteristische Reinheitsanforderungen und Luftströmungsverhältnisse auszeichnet. Dabei kann ein Reinraum gemäß der vorliegenden Erfindung beispielsweise ein Operationssaal oder ein sonstiger Eingriffsraum im medizinischen und/oder pharmazeutischen Bereich sein. Zusätzlich kann ein Reinraum gemäß der vorliegenden Erfindung aber auch ein beispielsweise in der Mikroelektronik zum Einsatz kommender Reinraum sein. Ferner wird erfindungsgemäß unter einem Reinraum auch ein Teil oder ein Bereich eines Raumes verstanden, welcher bestimmte Reinheits- und Luftströmungsverhältnisse aufweisen muss.

Bei Operationssälen in Krankenhäusern ist es mittlerweile Standard, dass über einem Operationstisch mittels eines Laminarlüftungsfeldes eine definierte laminare, vertikal von oben nach unten gerichtete turbulenzarme Luftströmung ausgebildet wird, sodass am Boden bzw. im Bereich außerhalb des Laminarlüftungsfeldes befindliche Partikel während einer Operation in Bereichen außerhalb des laminaren Strömungsbereiches gehalten werden und somit eine Operation unter hochgradig sauberen Bedingungen durchgeführt werden kann. Darüber hinaus ist in einem Operationssaal eine bestimmte Temperatur einzustellen, die sich typischerweise zwischen 20 und 21 °C bewegt. Dabei ist es erforderlich, dass es insbesondere in dem Bereich des Operationstisches keine Temperaturschwankungen gibt, welche die laminare Luftströmung oberhalb des Operationstisches stören könnten. Jegliche Verwirbelungen in diesem Bereich könnten Verunreinigungen bewirken, die sich drastisch auf das Operationsergebnis auswirken können. Es ist demnach nicht nur die Temperatur möglichst genau einzustellen, sondern auch dafür zu sorgen, dass die Beheizung des Operationssaales so ausgebildet ist, dass Luftturbulenzen insbesondere im Bereich über dem Operationstisch vermieden werden.

Darüber hinaus besteht gerade bei Operationssälen das Erfordernis, dass die Temperatur in dem Bereich des Laminarlüftungsfeldes etwa um 0,5 bis 1 °C tiefer als die Luft außerhalb des Laminarlüftungsfeldes ist. Auf diese Weise wird durch die kältere Einströmtemperatur die laminare Strömung unterstützt. Die Temperaturdifferenzen zwischen dem Bereich oberhalb des Operationstisches und dem Raum außerhalb der laminaren Strömung dürfen jedoch nur minimal sein, um temperaturdifferenzbedingte Turbulenzen ausschließen zu können.

Letzteres ist mit den im Stand der Technik typischerweise an der Wand vorgesehenen Heizkörpern nahezu unmöglich. Solche Wandheizkörper bewirken in jedem Fall eine Konvektion in Richtung des Innenraumes des Operationssaales, die zu Störungen bzw. Turbulenzen im Laminarlüftungsfeld führen.

Um eine gleichmäßige Beheizung von Operationssälen unter möglichst geringer Beeinflussung des Laminarlüftungsfeldes vornehmen zu können, bestand ein Ansatz im Stand der Technik darin, Warmwasserwandheizungen einzusetzen, welche sich über die Wandflächen der Operationssäle erstrecken. Derartige Wandheizungen sind jedoch praktisch kaum realisierbar, da in der Praxis die notwendigen Wandflächen meist gar nicht zur Verfügung stehen. Ein weiterer Nachteil dieses Ansatzes besteht darin, dass es bei derartigen Wandheizungen nur zu einer sehr langsamen Temperatureinstellung innerhalb des Operationssaales kommt und Temperaturschwankungen somit auch nur langsam ausregulierbar sind.

Die Druckschrift US 2011/0097986 A1 offenbart ein modulares Multifunktionsdeckensystem, welches unter anderem zum Tragen von schwerem chirurgischem Equipment an einer Decke eines Operationssaales befestigt werden kann. Das modulare Multifunktionsdeckensystem kann optional eine Lüftungskomponente zum Filtern und/oder Klimatisieren von Luft enthalten.

Aus der Druckschrift DE 20 2009 016 870 U1 ist ein deckenbefestigtes Flächenheizelement mit einer Glasscheibe bekannt, auf welcher ein Heizelement aufgebracht ist. Das Flächenheizelement wird mittels Grundhalterungen, welche an einem aufvulkanisierten Rahmen befestigt sind, an einer Decke oder Wand angebracht.

Es ist somit die Aufgabe der vorliegenden Erfindung, eine geeignete Heiztechnik zur Verfügung zu stellen, die es ermöglicht, in Reinräumen, in welchen definierte Temperatur- und Luftströmungsverhältnisse eingestellt werden müssen, möglichst effektiv, genau und turbulenzarm die Raumtemperatur einstellen zu können.

Diese Aufgabe wird erfindungsgemäß durch einen Reinraum mit einer Infrarotstrahlungs-Flächenheizung nach Anspruch 1 gelöst.

Die vorliegende Erfindung geht somit einen völlig anderen Weg als der Stand der Technik. So ist erfindungsgemäß eine Heizung vorgesehen, die den Innenraum des Reinraumes von der Decke her beheizt. Dabei ist die Richtung der von der erfindungsgemäßen Infrarotstrahlungs-Flächenheizung ausgehenden Infrarotstrahlung vertikal nach unten ausgerichtet, sodass ausgehend von der erfindungsgemäßen Infrarotstrahlungs-Flächenheizung im Innenraum des Reinraumes keine bzw. nur minimale Luftverwirbelungen zu erwarten sind. Damit ist die erfindungsgemäße Infrarotstrahlungs-Flächenheizung insbesondere für Reinräume, wie Operationssäle, Eingriffsräume im medizinischen und pharmazeutischen Bereich sowie für Reinräume in der Industrie, geeignet, in welchen neben einer definierten Einstellung der Temperatur auch möglichst geringe Turbulenzen von Luftströmungen im Innenraum des Reinraumes gefordert werden.

Die erfindungsgemäße Infrarotstrahlungs-Flächenheizung ist hierbei direkt in die Decke des Reinraumes flächenbündig eingebaut. Sie bildet somit eine Ebene mit der Deckenfläche.

Bei der vorliegenden Erfindung dient das Türblatt der Revisionstür als wärmeleitfähige Strahlungsplatte, auf welcher die Strahlungsheizanordnung vorgesehen ist. Die Strahlungsplatte besteht demnach aus einem gut wärmeleitfähigen Material, welches die von der Strahlungsheizanordnung erzeugte Wärme gut an den Innenraum des Reinraumes abgeben kann. Aufgrund der flächigen Ausgestaltung der Revisionstür wird dabei über die gesamte Fläche der Strahlungsplatte hinweg Wärme in den Innenraum des Reinraumes abgegeben.

Durch die oberhalb der Strahlungsheizanordnung vorgesehene, hitzebeständige Isolation wird zudem zu einem wesentlichen Teil verhindert, dass die von der Strahlungsheizanordnung erzeugte Wärme einen Bereich oberhalb der Decke des Reinraumes abgegeben wird. Die erzeugte Strahlungswärme ist somit für die Erwärmung des Reinraumes nahezu vollumfänglich verfügbar.

Da die Türaußenfläche der Revisionstür desinfektionsmittelbeständig ist, kann die Revisionstür ohne Bedenken in den Reinraum eingebaut werden und in geeigneten Abständen mit Desinfektionsmittel gereinigt werden.

Durch das bei der erfindungsgemäßen Infrarotstrahlungs-Flächenheizung vorgesehene Sicherheitsthermostat wird zudem eine hochgenaue Einstellung der Temperatur mit der erfindungsgemäßen Infrarotstrahlungs-Flächenheizung gewährleistet.

In einer besonders geeigneten Ausführungsform der vorliegenden Erfindung ist die Strahlungsheizanordnung eine Widerstandsheizdrahtanordnung. Die verwendeten Widerstandsheizdrähte besitzen den Vorteil, dass der stromdurchflossene Draht kein Magnetfeld ausbildet, welches für die im Innenraum des Reinraumes betriebenen Geräte störend sein könnte. Darüber hinaus wird durch die verwendete Widerstandsheizdrahtanordnung eine zuverlässige Beheizung des Reinraumes ermöglicht.

In einer alternativen Anordnung kann als Strahlungsheizanordnung auch eine Heizfolienanordnung verwendet werden. Auch bei der Verwendung von Heizfolien kann das entstehende Magnetfeld sehr gering gehalten werden, um dadurch bedingte Störungen von Geräten innerhalb des Reinraumes nahezu ausschließen zu können. Der Einsatz einer Heizfolienanordnung ist jedoch deutlich kostengünstiger als die Verwendung von Widerstandsheizdrahtanordnungen und kann daher insbesondere bei relativ großen zu beheizenden Reinräumen von Vorteil sein.

Es hat sich als günstig erwiesen, wenn die Strahlungsheizanordnung auf einer bis wenigstens 130 °C hitzebeständigen Unterlage, wie einem Gewebe, fixiert ist. Dabei kann als Unterlage beispielsweise ein Glasseidengewebe verwendet werden, auf welchem beispielsweise eine Heizdrahtanordnung aufgenäht ist. Darüber hinaus sind jedoch auch andere Unterlagen und/oder Fixierungsvarianten für die Strahlungsheizanordnung denkbar. Durch das Vorsehen einer Vorfixierung der Strahlungsheizanordnung auf der hitzebeständigen Unterlage kann die Unterlage mit der darauf fixierten Strahlungsheizanordnung schon industriell vorgefertigt werden und beim Einbau der Infrarotstrahlungs-Flächenheizung geeignet auf der Platteninnenoberfläche der Strahlungsplatte fixiert werden.

So ist es gemäß einer Variante der vorliegenden Erfindung beispielsweise möglich, dass die Unterlage mit der darauf vorgesehenen Strahlungsheizanordnung mit der Platteninnenoberfläche der Strahlungsplatte verklebt wird. Für ein solches Verkleben kann beispielsweise Silikon eingesetzt werden. Darüber hinaus können jedoch auch andere geeignete Fixierungsmittel verwendet werden. Auch ist es möglich, die Strahlungsheizanordnung direkt auf der Platteninnenoberfläche der Strahlungsplatte, das heißt ohne vorher auf einer Unterlage fixiert zu sein, in geeigneter Form vorzusehen.

Vorzugsweise ist die Strahlungsplatte aus einem mit einer desinfektionsmittelbeständigen Pulverbeschichtung beschichteten Stahlblech oder aus Edelstahl ausgebildet. Sowohl die desinfektionsmittelbeständige Pulverbeschichtung als auch die Edelstahlausbildung der Strahlungsplatte ermöglichen deren Reinigung mit einem geeigneten Desinfektionsmittel, sodass die erfindungsgemäße Infrarotstrahlungs-Flächenheizung dauerhaft ohne Schädigung innerhalb eines Reinraumes verwendet und bei Bedarf gereinigt werden kann.

In einer bevorzugten Ausgestaltung der vorliegenden Erfindung weist die Infrarotstrahlungs-Flächenheizung wenigstens einen zusätzlichen Temperaturfühler auf. Hierdurch wird eine hochgenaue Temperatureinstellung gewährleistet.

Es ist außerdem von Vorteil, wenn die oberhalb der Strahlungsheizanordnung vorgesehene, hitzebeständige Isolation sowohl an der Strahlungsplatte als auch an einem Türrahmen der Revisionstür fixiert ist. Dadurch wird auch bei einem Öffnen der Revisionstür die Isolation fest in ihrer Position oberhalb der Strahlungsheizanordnung gehalten.

Es empfiehlt sich, zwischen der Strahlungsplatte und einem Türrahmen der Revisionstür Silikon vorzusehen. Damit wird eine geeignete Dichtung zwischen der Strahlungsplatte und dem Türrahmen realisiert.

Gemäß einer besonders bevorzugten Ausbildung der erfindungsgemäßen Infrarotstrahlungs-Flächenheizung ist die Revisionstür klappbar, das heißt, die Revisionstür ist aus der Decke des Reinraumes ausklappbar und in diese wieder einklappbar. Dadurch kann zum einen die Revisionstür auf einfache Weise in eine vorgesehene Öffnung in der Decke des Reinraumes eingebaut werden. Zudem ist es hierdurch möglich, dass die Revisionstür in geeigneten Kontrollabständen geöffnet werden kann, um Wartungen und/oder Reparaturen und/oder Einstellungen an der erfindungsgemäßen Infrarotstrahlungs-Flächenheizung, den im Deckenhohlraum befindlichen Rauchmeldern und Reinigungsarbeiten über Reinigungsöffnungen im Lüftungskanalsystem vornehmen zu können.

Hierbei ist es besonders praktisch, wenn die Revisionstür Schnappverschlüsse zum Öffnen und Schließen der Revisionstür sowie eine Fangsicherung aufweist, um die Revisionstür nach dem Öffnen in einer geeigneten Zwischenstellung halten zu können.

Gemäß einem weiteren vorteilhaften Ausführungsbeispiel der Erfindung ist im eingebauten Zustand der Infrarotstrahlungs-Flächenheizung zwischen der Revisionstür und einem zugehörigen, in der Decke des Reinraumes vorgesehenen Deckeneinbaurahmen wenigstens eine Dichtung vorgesehen. Diese Dichtung verhindert, dass Verunreinigungen aus einem Bereich oberhalb der Decke in den Innenraum des Reinraumes gelangen können.

Zudem ist es von Vorteil, wenn oberhalb eines in der Decke des Reinraumes vorgesehenen Deckeneinbaurahmens der Infrarotstrahlungs-Flächenheizung wenigstens eine bis 150 °C hitzebeständige Kabelanschlussdose für die Infrarotstrahlungs-Flächenheizung vorgesehen ist. Mittels der Kabelanschlussdose können alle von der Strahlungsheizanordnung ausgehenden Kabel an einer durch die Kabelanschlussdose zur Verfügung gestellten Stelle elektrisch angeschlossen werden.

Es empfiehlt sich, die Strahlungsheizanordnung mittels bis wenigstens 150 °C hitzebeständigen Kabeln elektrisch anzuschließen. Dadurch wird dauerhaft eine sichere Funktion der erfindungsgemäßen Infrarotstrahlungs-Flächenheizung gewährleistet.

Außerdem ist es sinnvoll, wenn im eingebauten Zustand der Infrarotstrahlungs-Flächenheizung oberhalb der Revisionstür wenigstens eine bis wenigstens 150 °C hitzebeständige Kabeldurchführung vorgesehen ist. Durch diese Kabeldurchführung können die von der Strahlungsheizanordnung ausgehenden Kabel gesammelt in einen Bereich oberhalb der Decke des Reinraumes geleitet werden, wo sie geeignet elektrisch angeschlossen werden können.

Bevorzugt wird in einem Reinraum oberhalb eines darin angeordneten Arbeitsfeldes ein Laminarlüftungsfeld zur Erzeugung einer laminaren, vertikal in Richtung des Arbeitsfeldes gerichteten Luftströmung vorgesehen, wobei plattenförmige Infrarotstrahlungs-Flächenheizungen nach wenigstens einer der oben beschriebenen Ausführungsformen in der Decke des Reinraumes integriert und um das Laminarlüftungsfeld symmetrisch verteilt sind.

Durch die erfindungsgemäße Reinraumanordnung wird eine Beheizung des jeweiligen Reinraumes, welcher, wie bereits oben erwähnt, ein Operationssaal, ein sonstiger Eingriffsraum im medizinischen oder pharmazeutischen Bereich oder ein in der Industrie verwendbarer Reinraum sein kann, von der Decke des Reinraumes aus erreicht. Die Ausrichtung der von der Decke ausgehenden Infrarotstrahlung ist dabei etwa parallel zu der durch das Laminarlüftungsfeld erzeugten laminaren, vertikal in Richtung des Arbeitsfeldes gerichteten Luftströmung. Infolgedessen erzielt man bei der erfindungsgemäßen Reinraumanordnung eine geeignete Beheizung des Reinraumes ohne Störung der durch das Laminarlüftungsfeld erzeugten laminaren Luftströmung in dem Arbeitsfeld des Reinraumes.

Durch die symmetrische Verteilung der in der Decke vorgesehenen plattenförmigen Infrarotstrahlungs-Flächenheizungen wird der Innenraum des Reinraumes gleichmäßig erwärmt. Zudem werden hierdurch Zirkulationen in dem Innenraum des Reinraumes, quer zur laminaren Luftströmung des Laminarlüftungsfeldes weitgehend vermieden. Außerdem kann innerhalb der erfindungsgemäßen Reinraumanordnung das verwendete Heizsystem dazu eingesetzt werden, Raumtemperaturdifferenzen geeignet auszugleichen. Ferner sind mit den erfindungsgemäß eingesetzten Infrarotstrahlungs-Flächenheizungen schnelle und flexible Temperaturanpassungen innerhalb des Reinraumes möglich.

So können beispielsweise mit Hilfe der erfindungsgemäßen Reinraumanordnung innerhalb eines Operationssaales im Bereich unterhalb des Laminarlüftungsfeldes Temperaturen von 20 °C eingestellt werden, während im Innenraum des Reinraumes Temperaturen von ca. 20,5 bis 21 °C vorliegen müssen. Durch die Temperaturdifferenz zwischen dem geschützten und dem ungeschützten Bereich des Reinraumes wird die durch das Laminarlüftungsfeld erzeugte, nach unten gerichtete Luftströmung seitlich des Laminarlüftungsfeldes in Richtung der darüber bzw. in den Wänden vorgesehenen Abluftinstallation geführt, sodass ein geeigneter Luftaustausch innerhalb des Reinraumes möglich ist, bei welchem Verwirbelungen unterhalb des Laminarlüftungsfeldes minimiert sind. Die für die laminare turbulenzarme Strömung notwendige Temperaturdifferenz von 0,5 bis 1 Kelvin muss zur Vermeidung einer Raumauskühlung durch die erfindungsgemäß eingesetzten Infrarotstrahlungs-Flächenheizungen ausgeglichen werden. Ebenso werden Transmissionsverluste des Raumes mit den erfindungsgemäß verwendeten Infrarotstrahlungs-Flächenheizungen ausgeglichen.

In einem vorteilhaften Ausführungsbeispiel der vorliegenden Erfindung ist die Reinraumanordnung so gestaltet, dass das Laminarlüftungsfeld etwa in der Mitte des Reinraumes vorgesehen ist und die Infrarotstrahlungs-Flächenheizungen gleichmäßig, beispielsweise vierseitig, um das Laminarlüftungsfeld vorgesehen sind. Somit kann der gesamte Reinraum gleichmäßig und mit minimalen Luftturbulenzen beheizt werden.

Gemäß einer anderen Variante der Erfindung ist die Reinraumanordnung so gewählt, dass das Laminarlüftungsfeld an einer Wandseite des Reinraumes vorgesehen ist und die Infrarotstrahlungs-Flächenheizungen spiegelsymmetrisch an zwei, nicht der Wandseite gegenüber liegenden Seiten des Laminarlüftungsfeldes vorgesehen sind. Eine solche Anordnung eignet sich beispielsweise in einem Bereich des Reinraumes, in welchem die für die Arbeit im Arbeitsfeld notwendigen Instrumente auf einem Tisch bereit liegen.

Es hat sich außerdem als vorteilhaft erwiesen, wenn die Infrarotstrahlungs-Flächenheizungen jeweils beidseitig der Ecken der Decke des Reinraumes vorgesehen sind. Somit wird ausgehend von allen Ecken des Reinraumes eine geeignete, in den Innenraum des Reinraumes gerichtete Ausheizung des Reinraumes ermöglicht.

Günstig kann es auch sein, wenn sich die Infrarotstrahlungs-Flächenheizungen an wenigstens zwei Deckenseiten des Reinraumes zumindest teilweise längs der Deckenseite erstrecken. Hierdurch wird eine vergrößerte Heizfläche zur Verfügung gestellt, wodurch eine besonders effektive Aufheizung des Innenraumes des Reinraumes erreicht wird.

Vorzugsweise ist der erfindungsgemäße Reinraum so gestaltet, dass das Heizsystem keine weiteren Heizelemente an Wänden und/oder Fußboden des Reinraumes aufweist. Zwar sind zusätzliche Heizelemente an Wänden des Reinraumes bei der vorliegenden Erfindung generell nicht ausgeschlossen, solche zusätzlichen Heizelemente sind jedoch immer durch ein starres Regelverhalten gekennzeichnet und daher, wenn möglich, auszuschließen. So ermöglicht es die erfindungsgemäße Reinraumanordnung allein durch die in der Decke vorgesehenen Infrarotstrahlungs-Flächenheizungen, eine geeignete Ausheizung des Innenraumes des Reinraumes zu erreichen.

Es hat sich als besonders vorteilhaft herauskristallisiert, wenn an der Decke des Reinraumes um das Laminarlüftungsfeld zunächst eine Leuchten und Deckenversorgung aufweisende Anordnung vorgesehen ist und die Infrarotstrahlungs-Flächenheizungen um diese Anordnung vorgesehen sind.

Günstig ist es auch, wenn sich jeweils an die Infrarotstrahlungs-Flächenheizung oberhalb der Decke des Reinraumes wenigstens ein Deckenhohlraum anschließt, in welchem wenigstens ein Lüftungskanal und/oder wenigstens ein Anschluss für die Infrarotstrahlungs-Flächenheizung vorgesehen sind. Indem der Anschluss für die Infrarotstrahlungs-Flächenheizung direkt oberhalb der Infrarotstrahlungs-Flächenheizung in dem nicht den Reinheitserfordemissen des Reinraumes unterliegenden Deckenhohlraum vorgesehen ist, sind nur geringe Kabelwege erforderlich, und die Installation befindet sich hierdurch nicht innerhalb des Innenraumes des Reinraumes, sondern an einer geeignet zugänglichen Stelle oberhalb der Decke des Reinraumes. Dabei empfiehlt es sich, dass in dem Deckenhohlraum wenigstens ein Rauchmelder vorgesehen ist. Durch den Lüftungskanal, der zwar durch den Deckenhohlraum führt, dessen Kanalinnenbereich aber geeignet gegenüber der Umgebungsluft im Deckenhohlraum abgeschirmt ist, kann saubere Luft in den Innenraum des Reinraumes geleitet werden.

Vorzugsweise ist die Decke des Reinraumes aus Gipstrockenbau, Blechpaneelen oder Hochdruck-Schichtstoff-Pressplatten ausgebildet. Ein solcher Aufbau eignet sich besonders gut, um die erfindungsgemäß vorgeschlagene Revisionstür darin einzubauen.

Gemäß einer Weiterbildung der erfindungsgemäßen Reinraumanordnung weist jede der Infrarotstrahlungs-Flächenheizungen einen Schalter für ein separates An- und Abschalten der Infrarotstrahlungs-Flächenheizung und/oder eine eigene Betriebsanzeige auf. Dadurch ist es möglich, beispielsweise durch ein gesteuertes An- und Abschalten der einzelnen Infrarotstrahlungs-Flächenheizungen eine noch bessere Temperaturregulierung innerhalb des Reinraumes vornehmen zu können. Durch die vorgeschlagene Betriebsanzeige kann zudem eine rasche Überprüfung der Funktion der einzelnen Infrarotstrahlungs-Flächenheizungen vorgenommen werden.

Bevorzugte Ausführungsformen der vorliegenden Erfindung, deren Aufbau, Funktion und Vorteile werden im Folgenden anhand von Figuren näher erläutert, wobei
- Figur 1: schematisch einen Querschnitt durch eine Reinraumanordnung gemäß einer Ausführungsform der vorliegenden Erfindung zeigt;
- Figur 2: schematisch einen Querschnitt durch eine Ausführungsform einer erfindungsgemäßen Infrarotstrahlungs-Flächenheizung zeigt;
- Figur 3: schematisch eine Draufsicht auf eine Ausführungsform einer erfindungsgemäß verwendeten Revisionstür, beispielsweise aus einem Deckenhohlraum, zeigt;
- Figur 4: schematisch eine Ansicht der Revisionstür aus Figur 3 von unten, beispielsweise aus Sicht vom Innenraum eines Reinraumes aus, zeigt;
- Figur 5: schematisch eine Draufsicht auf eine mögliche Ausgestaltung einer Reinraumanordnung gemäß der vorliegenden Erfindung zeigt; und
- Figur 6: schematisch eine Draufsicht auf eine weitere mögliche Ausbildung einer erfindungsgemäßen Reinraumanordnung zeigt.

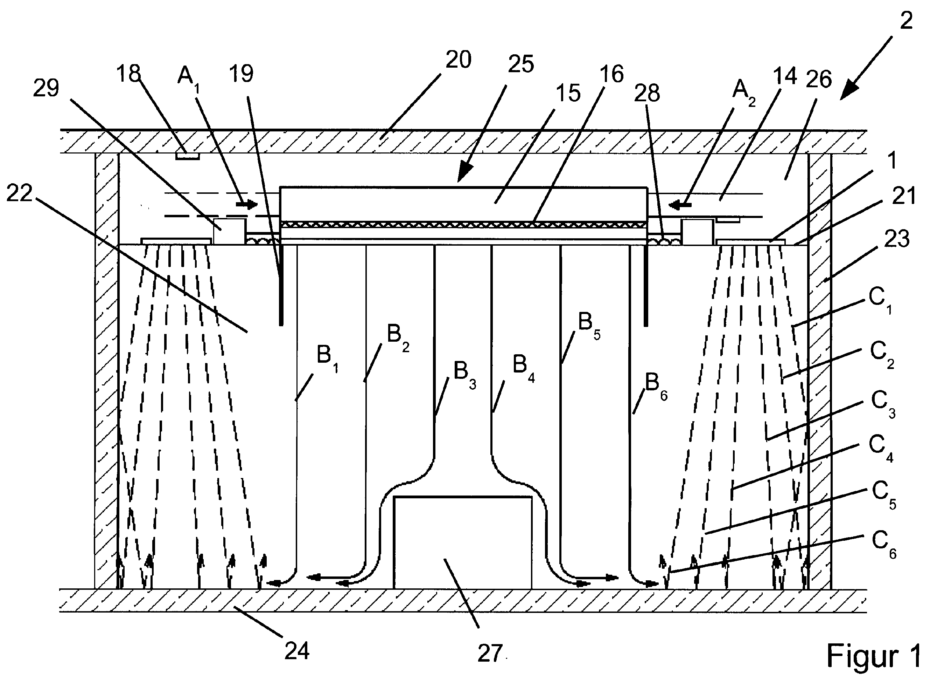

Figur 1 zeigt schematisch einen Querschnitt durch eine mögliche Ausführungsform einer erfindungsgemäßen Reinraumanordnung.

Die Reinraumanordnung weist einen Reinraum 2 mit einer Rohdecke 20, einer abgehangenen Decke 21, Wänden 23 und einem Fußboden 24 auf, wobei die Decke 21, die Wände 23 und der Fußboden 24 einen Innenraum 22 des Reinraumes 2 umschließen. Zwischen der Rohdecke 20 und der abgehangenen Decke 21 ist ein Deckenhohlraum 26 ausgebildet, in welchem ein Lüftungskanal 14 vorgesehen ist. Die Decke 21 des Reinraumes 2 kann beispielsweise aus Gipskarton ausgebildet sein. Es eignen sich jedoch auch andere mögliche Deckengestaltungen, wie beispielsweise Blechpaneelen oder Hochdruck-Schichtstoffpressplatten.

In der in Figur 1 dargestellten Anordnung ist etwa in der Mitte, in der Decke 21 des Reinraumes 2 ein Laminarlüftungsfeld 25 vorgesehen. Mit Hilfe des Laminarlüftungsfeldes 25 wird, wie es durch die Pfeile A₁, A₂ in Figur 1 schematisch dargestellt ist, Zuluft aus dem Lüftungskanal 14 oberhalb der Decke 21 herangeführt und dann laminar vertikal, das heißt, in Form einer turbulenzarmen Verdrängungsströmung, nach unten in Richtung eines unterhalb des Laminarlüftungsfeldes 25 in dem Innenraum 22 des Reinraumes 2 vorgesehenen Arbeitsfeldes geleitet. In dem gezeigten Beispiel befindet sich in dem Arbeitsfeld ein Tisch 27, beispielsweise ein Operationstisch. Seitlich des Laminarlüftungsfeldes 25 ist eine Luftleitschürze 19 vorgesehen. Das Laminarlüftungsfeld 25 weist eine oben angeordnete Luftverteilkammer 15 und einen Filter 16 auf.

Die laminare Luftströmung ist in Figur 1 schematisch anhand der Pfeile B₁ bis B₆ dargestellt. Im Bereich des Tisches 27 verläuft diese Luftströmung um den Tisch 27. Im Bereich des Fußbodens 24 des Reinraumes 2 wird die Luftströmung, wie es ebenfalls anhand der Pfeile B₁ bis B₆ in Figur 1 zu sehen ist, seitlich nach unten abgelenkt.

Neben dem Laminarlüftungsfeld 25 sind in der Decke 21 Leuchten 28 vorgesehen. In einem Bereich um die Leuchten 28 ist in der in Figur 1 dargestellten Ausführungsform eine Abluftansaugung 29 vorgesehen. Mit Hilfe der Abluftansaugung 29 wird die zunächst durch das Laminarlüftungsfeld 25 vertikal nach unten ausgerichtete Luftströmung in dem Bereich neben dem Laminarlüftungsfeld 25 wieder nach oben gelenkt und abgesaugt. Auf diese Weise ist innerhalb des Reinraumes 2 ein geeigneter Luftaustausch realisierbar.

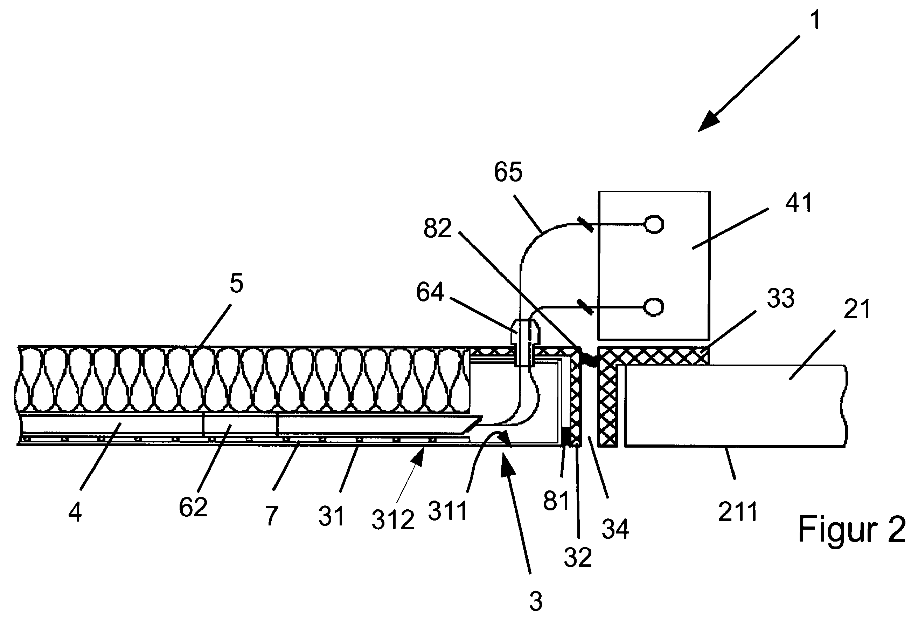

Wie es ebenfalls schematisch in der Darstellung von Figur 1 gezeigt ist, befindet sich in einem Bereich um die Anordnung aus Laminarlüftungsfeld 25, Leuchten 28 und Abluftansaugung 29 das Heizsystem. Das Heizsystem ist in dem Reinraum 2 mittels symmetrisch um das Laminarlüftungsfeld 25 angeordneten, plattenförmigen Infrarotstrahlungs-Flächenheizungen 1 ausgebildet. Ein Beispiel für die Ausbildung einer solchen Infrarotstrahlungs-Flächenheizung 1 ist in Figur 2 dargestellt und wird nachfolgend näher erläutert.

Jede der verwendeten Infrarotstrahlungs-Flächenheizungen 1 ist in einer in Figur 2 gezeigte Revisionstür 3 integriert, welche wiederum flächenbündig in die abgehangene Decke 21 des Reinraumes 2 eingebaut ist. Ausgehend von der Infrarotstrahlungs-Flächenheizung 1 wird, wie es in Figur 1 schematisch dargestellt ist, Infrarotstrahlung in den durch die mit C₁ bis C₆ gekennzeichneten Pfeile dargestellten Richtungen in den Innenraum 22 des Reinraumes 2 geleitet. Die Ausrichtung C der durch die Infrarotstrahlungs-Flächenheizungen 1 ausgestrahlten Strahlungswärme ist in etwa parallel zu der Ausrichtung B der Luftströmung unterhalb des Laminarlüftungsfeldes 25. Infolgedessen kommt es zwar durch den Einsatz der erfindungsgemäßen Infrarotstrahlungs-Flächenheizungen 1 zu einer gleichmäßigen Ausheizung des Innenraumes 22 des Reinraumes 2, aber kaum zu Veränderungen der laminaren Strömung der Luft unterhalb des Laminarlüftungsfeldes 25.

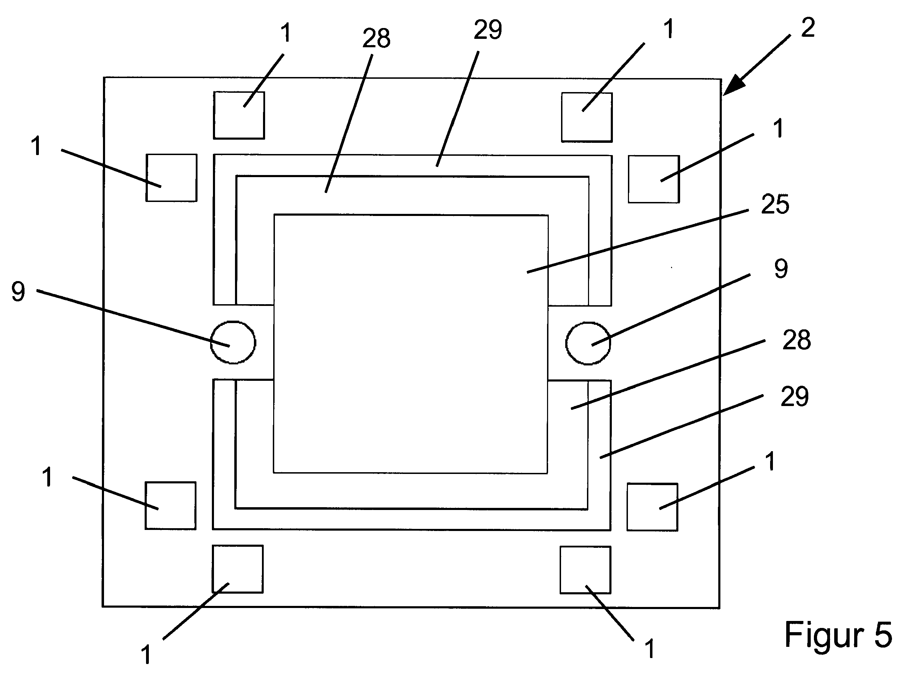

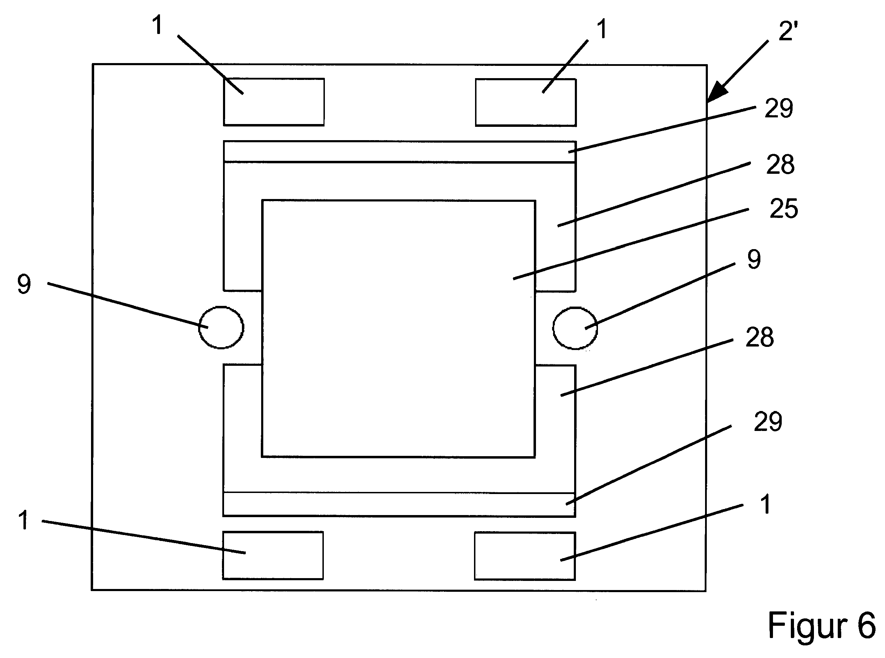

Die Anschlüsse und Zuleitungen für das Laminarlüftungsfeld 26, die Leuchten 28, die in den Figuren 5 und 6 gezeigte Deckenversorgungseinheit 9, der Lüftungskanal 14 und die Infrarotstrahlungs-Flächenheizung 1 befinden sich in dem gezeigten Beispiel in dem Deckenhohlraum 26, in welchem beispielsweise auch wenigstens ein Rauchmelder 18 vorgesehen ist.

Wie es ebenfalls in Figur 1 schematisch dargestellt ist, wird die Infrarotwärme, die durch die Infrarotstrahlungs-Flächenheizungen 1 in den Innenraum 22 des Reinraumes 2 geleitet wird, insbesondere an den Wänden 23 des Reinraumes 2 reflektiert. Dies führt jedoch ebenfalls kaum bzw. gar nicht zu Turbulenzen, die sich auf die laminare Strömung der Luft unterhalb des Laminarlüftungsfeldes 25 auswirken könnten.

Figur 2 zeigt schematisch einen Querschnitt durch eine mögliche Ausführungsform einer erfindungsgemäßen Infrarotstrahlungs-Flächenheizung 1. Die Infrarotstrahlungs-Flächenheizung 1 ist in eine Revisionstür 3 integriert. Die Revisionstür 3 ist flächenbündig in die abgehangene Decke 21 des beispielsweise in Figur 1 dargestellten Reinraumes 2 eingebaut.

Die Revisionstür 3 weist ein Türblatt auf, welches als eine wärmeleitfähige Strahlungsplatte 31 ausgebildet ist. Die Strahlungsplatte 31 ist an ihren Rändern etwa U-förmig ausgebildet. Ansonsten schließt eine Türaußenoberfläche 312 der Strahlungsplatte 31 bündig mit der Deckenfläche 211 der Decke 21 des Reinraumes 2 ab.

Die Strahlungsplatte 31 besteht in dem in Figur 2 dargestellten Ausführungsbeispiel aus Stahlblech, wobei die Türaußenoberfläche 312 der Strahlungsplatte 31 eine desinfektionsmittelbeständige Pulverbeschichtung aufweist. In anderen, nicht gezeigten Ausführungsformen der vorliegenden Erfindung kann die Strahlungsplatte 31 auch aus Edelstahl oder einem anderen geeigneten wärmeleitfähigen und darüber hinaus desinfektionsmittelbeständigen Material ausgebildet sein.

Auf einer Platteninnenoberfläche 311 der Strahlungsplatte 31 ist eine Strahlungsheizanordnung 4 vorgesehen. Die Strahlungsheizanordnung 4 ist in dem in Figur 2 dargestellten Ausführungsbeispiel zunächst auf einer Unterlage 7 aufgebracht, welche nachfolgend mit der Platteninnenoberfläche 311 der Strahlungsplatte 31 verklebt ist. Die Unterlage 7 ist wenigstens 130 °C hitzebeständig und kann beispielsweise ein Gewebe, wie zum Beispiel ein Glasseidengewebe sein, auf welchem die Strahlungsheizanordnung fixiert ist.

Die Strahlungsheizanordnung 4 ist in dem in Figur 2 dargestellten Ausführungsbeispiel eine Widerstandsheizdrahtanordnung. In anderen, nicht gezeigten Ausführungsformen der vorliegenden Erfindung kann als Strahlungsheizanordnung 4 jedoch auch beispielsweise eine Heizfolienanordnung verwendet werden.

Die in Figur 2 verwendete Widerstandsheizdrahtanordnung eignet sich besonders gut für den Einsatz der gezeigten Infrarotstrahlungs-Flächenheizung 1 in Operationssälen, da durch die Widerstandsheizdrahtanordnung kein störendes Magnetfeld ausgebildet wird, welches sich unter Umständen auf bestimmte Geräte innerhalb des Operationssaales unvorteilhaft auswirken könnte.

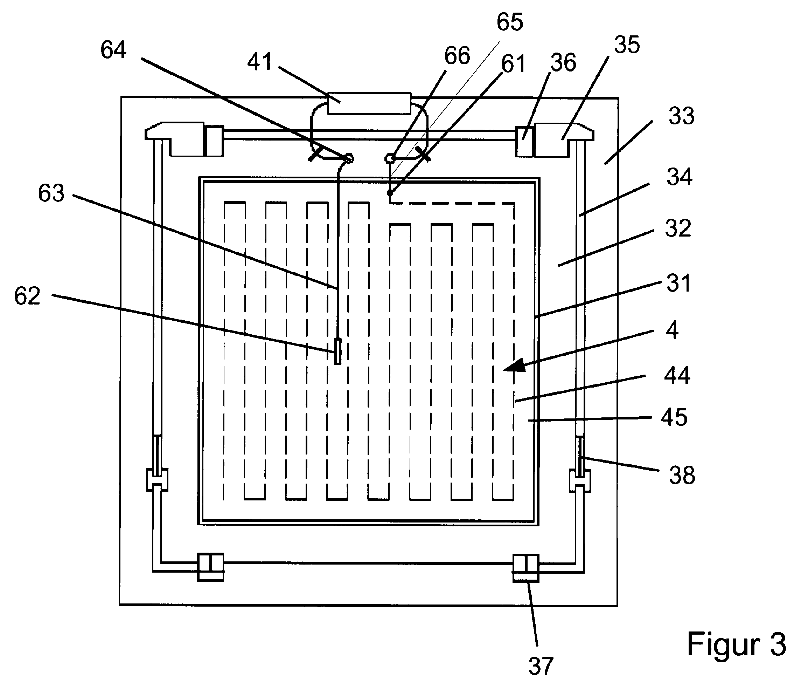

Die Infrarotstrahlungs-Flächenheizung 1 weist zudem ein beispielsweise in Figur 3 dargestelltes, mit der Strahlungsheizanordnung 4 gekoppeltes Sicherheitsthermostat 61 auf. Darüber hinaus besitzt die Infrarotstrahlungs-Flächenheizung 1 wenigstens einen weiteren Temperaturfühler 62.

Oberhalb der Strahlungsheizanordnung 4 ist eine bis wenigstens 150 °C hitzebeständige Isolation 5 vorgesehen. Die Isolation 5 kann beispielsweise aus Kautschuk oder Mineralwolle ausgebildet sein. Die Isolation 5 ist in dem in Figur 2 dargestellten Ausführungsbeispiel sowohl mit dem U-förmigen Rand der Strahlungsplatte 31 als auch mit einem Türrahmen 32 der Revisionstür 3 verklebt. Anstelle eines Verklebens kann hier auch eine andere Form der Fixierung der Isolation 5 an der Revisionstür 3 vorgesehen sein.

Die Strahlungsheizanordnung 4 wird mittels Kabeln 65 kontaktiert, welche vorzugsweises bis wenigstens 150 °C hitzebeständig sind.

In dem in Figur 2 dargestellten Ausführungsbeispiels sind die Kabel 65 durch ein in dem U-förmigen Teil der Strahlungsplatte 31 und dem Türrahmen 32 vorgesehene Kabeldurchführung 66 hindurchgeführt. Die Kabeldurchführung 66 besteht aus einem bis wenigstens 150 °C hitzebeständigen Material.

Die Kabel 65 führen zu einer beispielsweise in dem Deckenhohlraum 26 oberhalb der Decke 21 des Reinraumes 2 vorgesehenen Kabelanschlussdose 41, durch welche eine elektrische Kontaktierung der Kabel 65 und damit die Strahlungsheizanordnung 4 ermöglicht wird.

Zwischen dem U-förmigen Randbereich der Strahlungsplatte 31 und dem Revisionstürrahmen 32 ist in dem in Figur 2 dargestellten Ausführungsbeispiel hitzebeständiges Silikon 81 als Dichtungsmaterial vorgesehen. Ferner ist zwischen dem Revisionstürrahmen 32 der Revisionstür 3 und einem Deckeneinbaurahmen 33 für die Revisionstür 3 wenigstens eine Dichtung 82 vorgesehen, durch welche ein Eindringen von Verunreinigungen aus dem Deckenhohlraum 26 in den Innenraum 22 des Reinraumes 2 verhindert wird.

Figur 3 zeigt schematisch eine Draufsicht auf eine Ausführungsform einer erfindungsgemäß verwendeten Revisionstür 3 mit einer Infrarotstrahlungs-Flächenheizung 1, beispielsweise aus Sicht des Deckenhohlraumes 26, der oberhalb der Decke 21 des Reinraumes 2 vorgesehen ist.

Die Revisionstür 3 weist auf der Strahlungsplatte 31, welche beispielsweise in Figur 2 dargestellt ist, die Strahlungsheizanordnung 4 auf. Die Strahlungsheizanordnung 4 ist in dem in Figur 3 dargestellten Ausführungsbeispiel als Widerstandsheizdrahtanordnung ausgebildet, bei welcher ein Widerstandsheizdraht 44 auf eine Unterlage 7, wie beispielsweise ein Glasseidengewebe, aufgenäht ist, welche mit der Strahlungsplatte 31 verklebt ist.

Um die Strahlungsheizanordnung 4 weist die Revisionstür 3 einen Revisionstürrahmen 32 auf. Um die Revisionstür 3 ist in der Decke 21 des Reinraumes 2 ein Deckeneinbaurahmen 33 vorgesehen. Dabei ist zwischen dem Revisionstürrahmen 32 und dem Deckeneinbaurahmen 33 ein Spalt 34 ausgebildet, in welchem, wie es in Figur 2 gezeigt ist, eine Dichtung 82 vorgesehen ist.

An den beiden oben in Figur 3 dargestellten Ecken des Revisionstürrahmens 32 sind jeweils Einhängenasen 35 für die Revisionstür 3 vorgesehen, mit welcher die Revisionstür 3 in der Decke 21 gehalten werden kann. An die Einhängenasen 35 schließt jeweils ein Halteblech 36 an. Auf der den Haltenasen 35 gegenüber liegenden Seite der Revisionstür 3 weist diese beidseitig angeordnete Schnappverschlüsse 37 auf, mit welcher die Revisionstür 3 geöffnet und geschlossen werden kann, sodass die Infrarotstrahlungs-Flächenheizung 1 vom Innenraum 22 des Reinraumes 2 aus zugänglich ist. Dabei wird die Revisionstür 3 im aufgeklappten Zustand durch seitlich der Revisionstür 3 vorgesehene Fangsicherungen 38 in einem bestimmten Aufklappwinkel gehalten.

In der Ausführungsform von Figur 3 befindet sich oberhalb der Strahlungsheizanordnung 4 ein Temperaturfühler 62, an welchem ein Kabel 63 vorgesehen ist. Das Kabel 63 ist durch eine hitzebeständige Kabeldurchführung 64 für das Temperaturfühlerkabel hindurchgeführt. Daraufhin führt das Kabel 63 in eine Kabelanschlussdose 41.

Die Strahlungsheizanordnung 4 ist ferner mit einem Sicherheitsthermostat 61 gekoppelt. Das Sicherheitsthermostat 61 wird ebenfalls mittels eines Kabels 65 kontaktiert, welches durch eine hitzebeständige Kabeldurchführung 66 auch zu der Kabelanschlussdose 41 geführt ist. In der Kabelanschlussdose 41 erfolgt ein entsprechender Spannungsanschluss für die hineinführenden Kabel 63, 65.

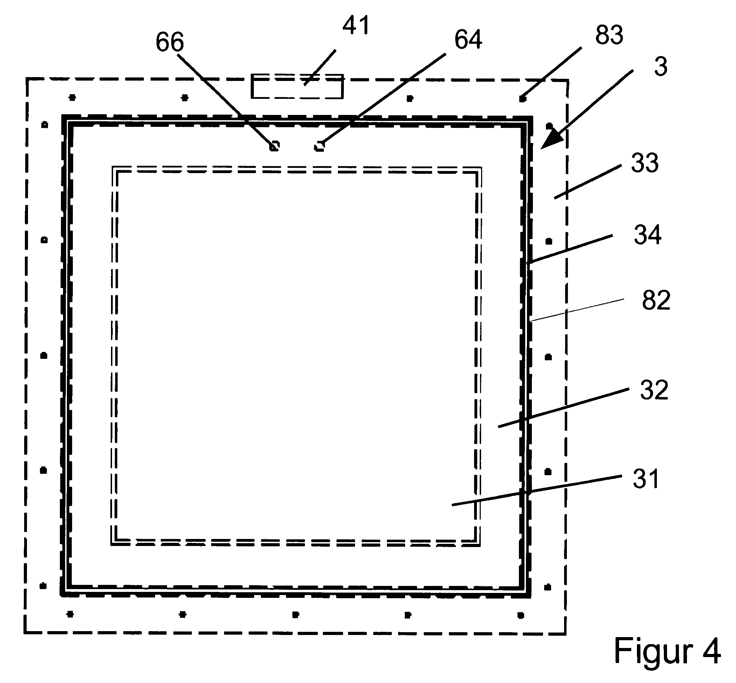

Figur 4 zeigt schematisch eine Ansicht auf die in Figur 3 dargestellte Revisionstür 3 von unten, das heißt beispielsweise aus Sicht vom Innenraum 22 des Reinraumes 2.

In dieser Ansicht sieht man die in Figur 2 bezeichnete Türaußenoberfläche 312 der Strahlungsplatte 31. In der Strahlungsplatte 31 ist der Revisionstürrahmen 32 vorgesehen, in welchem eine hitzebeständige Kabeldurchführung 64 für das Temperaturfühlerkabel 63 sowie eine hitzebeständige Kabeldurchführung 66 für das Anschlusskabel 65 des Widerstandsheizdrahtes 44 vorgesehen sind.

Um die Revisionstür 3 ist der Deckeneinbaurahmen 33 montiert, in welchem Befestigungsschrauben 83 eine Befestigung in der abgehangenen Decke 21 ermöglichen. Zwischen dem Revisionstürrahmen 32 und dem Deckeneinbaurahmen 33 ist ein Spalt 34 vorgesehen, in welchem eine Dichtung 82 eingebracht ist.

Figur 5 zeigt schematisch eine mögliche Ausgestaltung einer erfindungsgemäßen Reinraumanordnung in einer Draufsicht auf einen Reinraum 2. Dabei ist etwa in der Mitte des Reinraumes 2 ein Laminarlüftungsfeld 25 vorgesehen. In der gezeigten Ausführungsform befinden sich seitlich des Laminarlüftungsfeldes 25 Deckenversorgungseinheiten 9. Ferner sind jeweils gegenüber liegend um das Laminarlüftungsfeld 25 Leuchten 28 vorgesehen. Um die Leuchten 28 sind in dem in Figur 5 gezeigten Ausführungsbeispiel, ähnlich wie in Figur 1, Abluftansaugungen 29 installiert.

Die erfindungsgemäßen Infrarotstrahlungs-Flächenheizungen 1 sind in dem Beispiel von Figur 5 jeweils in den Eckbereichen des Reinraumes 2 symmetrisch verteilt angeordnet. Dabei sind die Infrarotstrahlungs-Flächenheizungen 1 jeweils beidseitig der Ecken der Decke 21 des Reinraumes 2 vorgesehen.

In anderen Ausführungsformen der vorliegenden Erfindung kann auch eine andere geeignete Reinraumanordnung gewählt werden. Ein Beispiel hierfür findet sich in der Darstellung von Figur 6. Dabei zeigt Figur 6 eine Draufsicht auf eine weitere mögliche erfindungsgemäße Reinraumanordnung in einem Reinraum 2'. Auch hier ist etwa mittig in dem Reinraum 2' ein Laminarlüftungsfeld 25 angeordnet, wobei seitlich des Laminarlüftungsfeldes 25 Deckenversorgungseinheiten 9 vorgesehen sind. An jeweils gegenüber liegenden Seiten befinden sich um das Laminarlüftungsfeld 25 Leuchten 28, an deren Seiten Abluftansaugungen 29 installiert sind.

In dem Beispiel von Figur 6 sind die erfindungsgemäßen Infrarotstrahlungs-Flächenheizungen 1 nur an zwei gegenüber liegenden Seiten des Reinraumes 2', jeweils direkt gegenüber den Abluftansaugungen 29 vorgesehen. Wiederum sind jedoch die Infrarotstrahlungs-Flächenheizungen 1 symmetrisch in dem Reinraum 2' verteilt angeordnet.

Bei den unterschiedlichen, erfindungsgemäß möglichen Reinraumanordnungen wird gezielt eine vorteilhafte Beheizung des Reinraumes 2, 2' erzielt, ohne dass die laminare Luftströmung unterhalb des Laminarlüftungsfeldes 25 hiervon gestört wird.

## Patentansprüche

1. Reinraum (2, 2') mit einer Infrarotstrahlungs-Flächenheizung (1),
**dadurch gekennzeichnet,**
**dass** die Infrarotstrahlungs-Flächenheizung (1) in eine Revisionstür (3) integriert ist, die in eine Decke (21) des Reinraumes (2, 2') flächenbündig eingebaut ist,
wobei das Türblatt der Revisionstür (3) als eine wärmeleitfähige Strahlungsplatte (31) ausgebildet ist, auf deren im eingebauten Zustand vom Innenraum (22) des Reinraumes (2, 2') abgewandten Platteninnenoberfläche (311) eine Strahlungsheizanordnung (4) vorgesehen ist, wobei eine Türaußenoberfläche (312) der Strahlungsplatte (31) bündig mit einer Deckenfläche (211) der Decke (21) des Reinraumes (2, 2') abschließt;
auf der im eingebauten Zustand vom Innenraum (22) des Reinraumes (2, 2') abgewandten Seite der Strahlungsplatte (31), oberhalb der Strahlungsheizanordnung (4) eine bis wenigstens 150 °C hitzebeständige Isolation (5) vorgesehen ist;
die Revisionstür (3) eine im eingebauten Zustand der Revisionstür (3) zum Innenraum (22) des Reinraumes (2, 2') ausgerichtete, desinfektionsmittelbeständige Türaußenoberfläche (312) aufweist; und
die Infrarotstrahlungs-Flächenheizung (1) wenigstens ein Sicherheitsthermostat (61) aufweist.

2. Reinraum nach Anspruch 1, **dadurch gekennzeichnet, dass** die Strahlungsheizanordnung (4) eine Widerstandsheizdrahtanordnung und/oder eine Heizfolienanordnung aufweist.

3. Reinraum nach wenigstens einem der vorhergehenden Ansprüche, **dadurch gekennzeichnet, dass** die Strahlungsheizanordnung (4) auf einer bis wenigstens 130 °C hitzebeständigen Unterlage (7) fixiert ist.

4. Reinraum nach Anspruch 3, **dadurch gekennzeichnet, dass** die Unterlage (7) mit der darauf vorgesehenen Strahlungsheizanordnung (4) mit der Platteninnenoberfläche (311) der Strahlungsplatte (31) verklebt ist.

5. Reinraum nach wenigstens einem der vorhergehenden Ansprüche, **dadurch gekennzeichnet, dass** die Strahlungsplatte (31) aus einem mit einer desinfektionsmittelbeständigen Pulverbeschichtung beschichteten Stahlblech oder aus Edelstahl ausgebildet ist.

6. Reinraum nach wenigstens einem der vorhergehenden Ansprüche, **dadurch gekennzeichnet, dass** die Infrarotstrahlungs-Flächenheizung (1) wenigstens einen zusätzlichen Temperaturfühler (62) aufweist.

7. Reinraum nach wenigstens einem der vorhergehenden Ansprüche, **dadurch gekennzeichnet, dass** die Isolation (5) an der Strahlungsplatte (31) und einem Türrahmen (32) der Revisionstür (3) fixiert und mit Silikon abgedichtet ist.

8. Reinraum nach wenigstens einem der vorhergehenden Ansprüche, **dadurch gekennzeichnet, dass** die Revisionstür (3) klappbar ist und an der Revisionstür (3) Schnappverschlüsse (37) zum Öffnen und Schließen der Revisionstür (3) und eine Fangsicherungen (38) vorgesehen sind.

9. Reinraum nach wenigstens einem der vorhergehenden Ansprüche, **dadurch gekennzeichnet, dass** im eingebauten Zustand der Infrarotstrahlungs-Flächenheizung (1) zwischen der Revisionstür (3) und einem zugehörigen, in der Decke (21) des Reinraumes (2, 2') vorgesehenen Deckeneinbaurahmen (33) wenigstens eine Dichtung (82) vorgesehen ist.

10. Reinraum nach wenigstens einem der vorhergehenden Ansprüche, **dadurch gekennzeichnet, dass** oberhalb eines in der Decke (21) des Reinraumes (2, 2') vorgesehenen Deckeneinbaurahmens (33) der Infrarotstrahlungs-Flächenheizung (1) wenigstens eine bis wenigstens 150 °C hitzebeständige Kabelanschlussdose (41) für die Infrarotstrahlungs-Flächenheizung (1) vorgesehen ist, die Strahlungsheizanordnung (4) mittels bis wenigstens 150 °C hitzebeständigen Kabeln (65) elektrisch angeschlossen ist und im eingebauten Zustand der Infrarotstrahlungs-Flächenheizung (1) oberhalb der Revisionstür (3) wenigstens eine, bis wenigstens 150 °C hitzebeständige Kabeldurchführung (66) vorgesehen ist.

11. Reinraum (2, 2') nach wenigstens einem der vorhergehenden Ansprüche, wobei oberhalb eines darin angeordneten Arbeitsfeldes ein Laminarlüftungsfeld (25) zur Erzeugung einer laminaren, vertikal in Richtung des Arbeitsfeldes gerichteten Luftströmung vorgesehen ist, und wobei mehrere plattenförmige Infrarotstrahlungs-Flächenheizungen (1) in der Decke (21) des Reinraumes (2, 2') integriert und um das Laminarlüftungsfeld (25) symmetrisch verteilt angeordnet sind.

12. Reinraum nach Anspruch 11, **dadurch gekennzeichnet, dass** das Laminarlüftungsfeld etwa in der Mitte des Reinraumes (2, 2') vorgesehen ist und die Infrarotstrahlungs-Flächenheizungen (1) gleichmäßig um das Laminarlüftungsfeld (25) vorgesehen sind.

13. Reinraum nach Anspruch 11 oder 12, **dadurch gekennzeichnet, dass** sich die Infrarotstrahlungs-Flächenheizungen (1) an wenigstens zwei Deckenseiten des Reinraumes (2, 2') zumindest teilweise längs der Deckenseite erstrecken.

14. Reinraum nach wenigstens einem der Ansprüche 11 bis 13, **dadurch gekennzeichnet dass** an der Decke (21) des Reinraumes (2, 2') um das Laminarlüftungsfeld (25) zunächst eine Leuchten (28) und Deckenversorgung aufweisende Anordnung vorgesehen ist und die Infrarotstrahlungs-Flächenheizungen (1) um diese Anordnung vorgesehen sind.

15. Reinraum nach wenigstens einem der Ansprüche 11 bis 14, **dadurch gekennzeichnet, dass** die Decke (21) des Reinraumes (2, 2') aus Gipstrockenbau, Blechpaneelen oder Hochdruck-Schichtstoffpressplatten ausgebildet ist.

## Claims

1. Cleanroom (2, 2') comprising an infrared surface heating (1),
**characterized in that**
the infrared surface heating (1) is installed in an inspection door (3), which is integrated flush with the adjacent areas in a ceiling (21) of the cleanroom (2, 2'), wherein the door leaf of the inspection door (3) is formed as a thermally conductive radiant panel (31), on whose inner plate surface (311) averted from the interior (22) of the cleanroom (2, 2') when installed, a radiant heating system (4) is provided, wherein an outer door surface (312) of the radiant panel (31) is flush with a ceiling surface (211) of the ceiling (21) of the cleanroom (2, 2');
on the side of the radiant panel (31), when installed, averted from the interior (22) of the cleanroom (2, 2'), above the radiant heating system (4), an insulation (5) being heat-resistant up to at least 150 °C is provided;
the inspection door (3), when the inspection door (3) is installed, comprises an disinfectant-resistant outer door surface (312) directed to the interior (22) of the cleanroom (2, 2'); and
the infrared surface heating (1) comprises at least one safety thermostat (61).

2. Cleanroom according to claim 1, **characterized in that** the radiant heating system (4) comprises a resistant heating wire arrangement and/or a heating foil arrangement.

3. Cleanroom according to one of the preceding claims, **characterized in that** the radiant heating system (4) is fixed on a base (7) being heat-resistant up to at least 130 °C.

4. Cleanroom according to claim 3, **characterized in that** the base (7) with the radiant heating system (4) provided thereon is glued with the inner plate surface (311) of the radiant panel (31).

5. Cleanroom according to at least one of the preceding claims, **characterized in that** the radiant panel (31) is formed of sheet steel or of stainless steel provided with a disinfectant resistant powder coating.

6. Cleanroom according to at least one of the preceding claims, **characterized in that** infrared surface heating (1) comprises at least one additional temperature sensor (62).

7. Cleanroom according to at least one of the preceding claims, **characterized in that** the insulation (5) is fixed at the radiant panel (31) and at a door frame (32) of the inspection door (3) and is sealed with silicon.

8. Cleanroom according to at least one of the preceding claims, **characterized in that** the inspection door (3) is hinged and at the inspection door (3), spring locks (37) for opening and closing the inspection door (3) and a catch mechanism (38) are provided.

9. Cleanroom according to at least one of the preceding claims, **characterized in that** the infrared surface heating (1), when installed, comprises at least one seal (82) being provided between the inspection door (3) and a respective recess frame (33) provided in the ceiling (21) of the cleanroom (2, 2').

10. Cleanroom according to at least one of the preceding claims, **characterized in that** at least one cable connection socket (41) being heat-resistant up to at least 150 °C for the infrared surface heating (1) is provided above of a recess frame (33) formed in the ceiling (21) of the cleanroom (2, 2') of the infrared surface heating (1), the radiant heating system (4) is electrically connected by cables (65) being heat-resistant up to at least 150 °C and the infrared surface heating (1), when installed, comprises at least one cable entry (66) being heat-resistant up to at least 150 °C and being provided above the inspection door (3).

11. Cleanroom (2, 2') according to at least one of the preceding claims, wherein a laminar ventilation panel (25) is provided above a field of work arranged in said cleanroom for generating a laminar airflow vertically directed to the field of work, and wherein several plate-shaped infrared surface heatings (1) are integrated in the ceiling (21) of the cleanroom (2, 2') and are provided symmetrically around the laminar ventilation panel (25).

12. Cleanroom according to claim 11, **characterized in that** the laminar ventilation panel is provided approximately in the middle of the cleanroom (2, 2') and the infrared surface heatings (1) are evenly provided around the laminar ventilation panel (25).

13. Cleanroom according to claim 11 or 12, **characterized in that** the infrared surface heatings (1) are extending at least partially along the ceiling side at at least two ceiling sides of the cleanroom (2, 2').

14. Cleanroom according to one of the claims 11 to 13, **characterized in that** an arrangement comprising a lamps (28) and ceiling-mounted supply unit is provided around the laminar ventilation panel (25) at the ceiling (21) of the cleanroom (2, 2') apriori and the infrared surface heatings (1) are provided around this arrangement.

15. Cleanroom according to at least one of the claims 11 to 14, **characterized in that** the ceiling (21) of the cleanroom (2, 2') is formed of dry gypsum construction, sheet metal panels or high-pressure laminates.

## Revendications

1. Salle propre (2, 2') avec un chauffage de surface par rayonnement infrarouge (1),
**caractérisée en ce que**
le chauffage de surface par rayonnement infrarouge (1) est installé dans une porte de visite (3) qui est intégrée en affleurement dans un plafond (21) de la salle propre (2, 2'), dans laquelle le vantail de porte de visite (3) est constitué en tant que plaque radiante (31) thermiquement conductrice, sur la surface intérieure de plaque (311) de laquelle, éloignée de l'espace intérieur (22) de la salle propre (2, 2') dans l'état monté, il est prévu un dispositif de chauffage par rayonnement (4), dans laquelle une surface extérieure de porte (312) de la plaque radiante (31) se termine en affleurement avec une surface de plafond (211) du plafond (21) de la salle propre (2, 2') ;
**en ce que**, sur le côté de la plaque radiante (31) éloigné, dans l'état monté, de l'espace intérieur (22) de la salle propre (2, 2'), au-dessus du dispositif de chauffage par rayonnement (4), il est prévu une isolation (5) résistant à la chaleur jusqu'à au moins 150 °C ;
**en ce que** la porte de visite (3) présente une surface extérieure de porte (312) résistant aux désinfectants et orientée, dans l'état monté de la porte de visite (3), vers l'espace intérieur (22) de la salle propre (2, 2') ; et
**en ce que** le chauffage de surface par rayonnement infrarouge (1) présente au moins un thermostat de sécurité (61).

2. Salle propre selon la revendication 1, **caractérisée en ce que** le dispositif de chauffage par rayonnement (4) présente un dispositif de fils de chauffage à résistance et/ou un dispositif de films chauffants.

3. Salle propre selon au moins l'une des revendications précédentes, **caractérisée en ce que** le dispositif de chauffage par rayonnement (4) est fixé sur une base (7) résistant à la chaleur jusqu'à au moins 130 °C.

4. Salle propre selon la revendication 3, **caractérisée en ce que** la base (7) avec le dispositif de chauffage par rayonnement (4) prévu monté dessus est collée sur la surface intérieure de plaque (311) de la plaque radiante (31).

5. Salle propre selon au moins l'une des revendications précédentes, **caractérisée en ce que** la plaque radiante (31) est constituée d'une tôle en acier ou acier fin revêtue d'un revêtement par poudre résistant aux désinfectants.

6. Salle propre selon au moins l'une des revendications précédentes, **caractérisée en ce que** le chauffage de surface par rayonnement infrarouge (1) présente au moins une sonde de température (62) supplémentaire.

7. Salle propre selon au moins l'une des revendications précédentes, **caractérisée en ce que** l'isolation (5) est fixée sur la plaque radiante (31) et un encadrement de porte (32) de la porte de visite (3), et est rendue étanche avec de la silicone.

8. Salle propre selon au moins l'une des revendications précédentes, **caractérisée en ce que** la porte de visite (3) est rabattable et **en ce qu'**il est prévu sur la porte de visite (3) des fermetures à déclic (37) pour l'ouverture et la fermeture de la porte de visite (3), et un dispositif de blocage (38).

9. Salle propre selon au moins une des revendications précédentes, **caractérisée en ce que,** dans l'état monté du chauffage de surface par rayonnement infrarouge (1), il est prévu au moins un joint d'étanchéité (82) entre la porte de visite (3) et un cadre de montage au plafond (33) correspondant prévu dans le plafond (21) de la salle propre (2, 2').

10. Salle propre selon au moins une des revendications précédentes, **caractérisée en ce que,** au-dessus d'un cadre de montage au plafond (33) du chauffage de surface par rayonnement infrarouge (1) prévu dans le plafond (21) de la salle propre (2, 2'), il est prévu au moins une prise de connexion pour câble (41) résistant à la chaleur jusqu'à au moins 150 °C pour le chauffage de surface par rayonnement infrarouge (1), le dispositif de chauffage par rayonnement (4) est connecté électriquement au moyen de câbles (65) résistant à la chaleur jusqu'à au moins 150 °C, et au moins un passage de câbles (66) résistant à la chaleur jusqu'à au moins 150 °C est prévu au-dessus de la porte de visite (3) dans l'état monté du chauffage de surface par rayonnement infrarouge (1).

11. Salle propre (2, 2') selon au moins une des revendications précédentes, dans laquelle une zone de ventilation laminaire (25) destinée à la production d'un écoulement d'air laminaire dirigé verticalement en direction de la zone de travail est prévue au-dessus d'une zone de travail qui est disposée à l'intérieur de la salle propre, et dans laquelle plusieurs chauffages de surface par rayonnement infrarouge (1) en forme de plaque sont disposés de façon intégrée dans le plafond (21) de la salle propre (2, 2') et répartis de façon symétrique autour de la zone de ventilation laminaire (25).

12. Salle propre selon la revendication 11, **caractérisée en ce que** la zone de ventilation laminaire est prévue à peu près au milieu de la salle propre (2, 2'), et **en ce que** les chauffages de surface par rayonnement infrarouge (1) sont prévus de façon régulière autour de la zone de ventilation laminaire (25).

13. Salle propre selon la revendication 11 ou 12, **caractérisée en ce que** les chauffages de surface par rayonnement infrarouge (1) s'étendent sur au moins deux côtés du plafond de la salle propre (2, 2') au moins partiellement le long du côté de plafond.

14. Salle propre selon au moins une des revendications 11 à 13, **caractérisée en ce que,** au plafond (21) de la salle propre (2, 2'), il est prévu autour de la zone de ventilation laminaire (25) d'abord un dispositif présentant des lampes (28) et une alimentation au plafond, et **en ce que** les chauffages de surface par rayonnement infrarouge (1) sont prévus autour de ce dispositif.

15. Salle propre selon au moins une des revendications 11 à 14, **caractérisée en ce que** le plafond (21) de la salle propre (2, 2') est constitué d'une construction sèche en plâtre, de panneaux de tôle ou de plaques pressées stratifiées haute pression.
